# EUROPEAN PATENT APPLICATION

(11) **EP 4 650 263 A1**
(43) Date of publication of application: **19.11.2025**
(21) Application number: 23916358.7
(22) Date of filing: 02.03.2023
(51) Int. Cl.: B63B 17/00, F17C 3/02, F17C 7/04, F17C 9/02

(54) **LIQUEFIED HYDROGEN FUEL TANK FOR SHIP, SUPPORT SYSTEM FOR CONNECTION PARTS USED THEREFOR, BREAKWATER PLATE WITH IMPROVED EFFICIENCY, AND VAPOR-COOLED SHIELD FOR IMPROVING THERMAL INSULATION**

(30) Priority: 11.01.2023 KR 20230004266
(71) Applicant: Korea Institute of Ocean Science and Technology, Busan 49111 (KR); Hylium Industries, Inc., Osan-si, Gyeonggi-do 18103 (KR)
(72) Inventor: KIM, Hyun Suk, Sejong 30152 (KR); KIM, Gun Woo, Siheung-si, Gyeonggi-do 14995 (KR); PARK, Byoung Jae, Daejeon 34050 (KR); STEPIEN, Piotr, Osan-si, Gyeonggi-do 18126 (KR); SCHIMPF, Kim Joshua, Osan-si, Gyeonggi-do 18122 (KR); HONG, Dong Hee, Seongnam-si, Gyeonggi-do 13488 (KR); KIM, Seo Young, Yongin-si, Gyeonggi-do 17162 (KR)
(74) Representative: EP&C
(86) International application number: PCT/KR2023/002886
(87) International publication number: WO 2024/150873

(57) **Abstract**

The present invention comprises: an inner tank in which cryogenic liquid is stored; a vapor-cooled shield enclosing the inner tank from the outside, one end of a plurality of connection parts being connected to the vapor-cooled shield and the other end being connected to the inner tank; a pipe member provided outside the vapor-cooled shield; and an outer tank enclosing the pipe member from the outside, wherein the pipe member insulates the inner tank by hydrogen that is vaporized and discharged.

## Description

### Technical Field

The present invention relates to a liquefied hydrogen fuel tank for ships, a connection part support system used therein, a baffle with improved efficiency, and a vapor-cooled shield for enhancing thermal insulation. More specifically, the present invention relates to a liquefied hydrogen fuel tank for ships, the connection part support system used therein, the baffle with improved efficiency, and the vapor-cooled shield for enhancing thermal insulation, which can improve storage efficiency and safety of cryogenic fluid stored inside the tank by enhancing thermal insulation performance and thereby minimizing the generation of boil-off gas and heat loss.

### Background Art

In recent years, due to the rapid development of industrialization and population growth, the demand for energy has been continuously increasing. As a result, there is an urgent need to secure alternative energy sources in response to the depletion of fossil fuels. In particular, in the case of Korea, a large amount of energy is consumed domestically, yet more than 90% of the energy used is dependent on imports from abroad. Accordingly, securing stable energy sources has become an urgent national issue.

Accordingly, hydrogen fuel is emerging as a promising alternative energy source that is gaining attention worldwide to address the complex energy issues currently being faced globally.

Hydrogen fuel is not only the most abundant element on Earth after carbon and nitrogen, but also a clean energy source that generates only trace amounts of nitrogen oxides upon combustion and emits no other pollutants. It can be produced from the Earth's abundant water resources and, after use, is recycled back into water, making it an optimal alternative energy source with no risk of depletion.

One of the most critical challenges in utilizing hydrogen fuel lies in the method of hydrogen storage. Known methods of hydrogen storage include compressing hydrogen gas for storage, liquefying hydrogen for storage, and storing hydrogen using metal hydrides.

Hydrogen is commonly distributed and stored in a liquefied state. In this state, hydrogen must be maintained at cryogenic temperatures, and thus, cryogenic fluids such as liquefied hydrogen are stored in storage tanks. It is necessary to properly supply the liquefied hydrogen to a designated target, such as a fuel cell or hydrogen-powered vehicle.

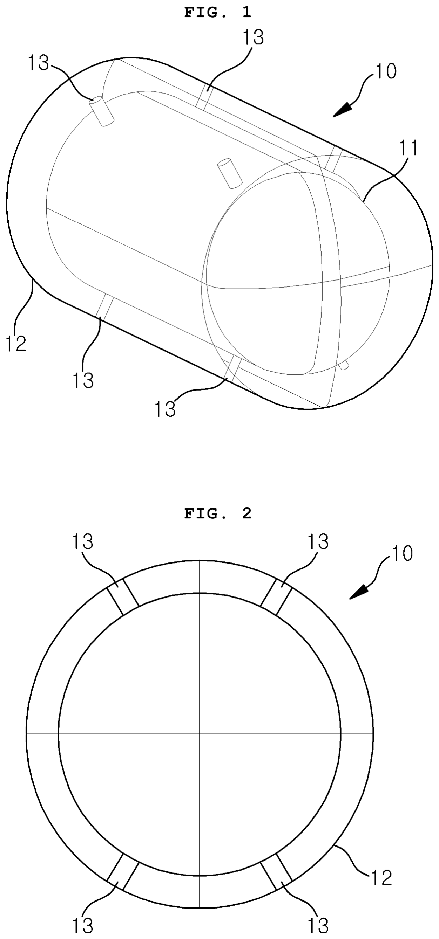

In addition to liquefied hydrogen, various types of gases such as nitrogen, helium, and natural gas are also liquefied at cryogenic temperatures for transportation and storage, and are stored in storage tanks. A general storage tank for storing such cryogenic fluids is illustrated in Figure 1.

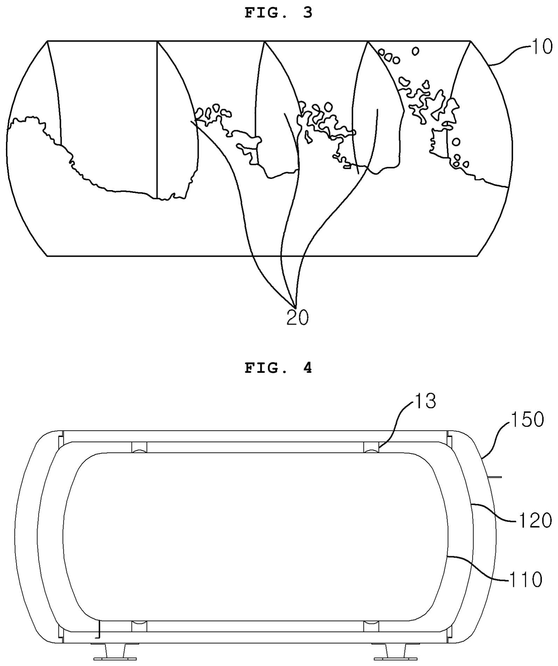

Figure 1 is a schematic diagram illustrating a cryogenic fluid storage tank, Figure 2 is a schematic cross-sectional view of the storage tank shown in Figure 1, and Figure 3 is a schematic diagram illustrating a conventional baffle provided in the storage tank.

Referring to Figure 1 to 3 together, a storage tank (10) for storing cryogenic fluids generally comprises an inner tank portion (11) in which the cryogenic fluid is stored, and an outer tank portion (12) formed to surround the inner tank portion (11) with a predetermined gap therebetween.

In this case, to maintain the gap between the inner tank portion (11) and the outer tank portion (12), a plurality of connection parts (13) connecting the inner tank portion (11) and the outer tank portion (12) may be provided.

The connection parts (13) are coupled to the outer wall of the inner tank portion (11) and the inner wall of the outer tank portion (12), preventing direct contact between the inner tank portion (11) and the inside of the outer tank portion (12), thereby maintaining the shape of the storage tank (10).

Additionally, at least one baffle (20) is installed inside the storage tank (10) at predetermined intervals to suppress the sloshing of the cryogenic fluid within the storage tank (10).

However, conventional connection parts (13) allow external heat to be transmitted into the inner tank portion (11), and the vapor of the cryogenic fluid residing inside the inner tank portion (11) due to vaporization caused by the transmitted external heat has a temperature higher than the boiling point of the stored cryogenic fluid. This reduces the storage efficiency of the cryogenic fluid and may also degrade safety due to pressure increase caused by the accumulated cryogenic fluid vapor.

Additionally, conventional baffles serve only to partially prevent the flow of fluid inside the storage tank.

In order to reduce hydrogen loss, it is of utmost importance to lower the evaporation rate of liquefied hydrogen. Accordingly, liquefied hydrogen storage tanks must have superior thermal insulation performance compared to conventional liquefied natural gas storage tanks.

Meanwhile, a method of storing boil-off gas generated in liquefied hydrogen storage tanks using hydrogen absorption alloys has been proposed. However, hydrogen absorption alloys exhibit poor hydrogen absorption rates at low temperatures, thus limiting their efficiency in absorbing boil-off gas of cryogenic liquefied hydrogen.

Korean Patent Publication No. 10-2020-0009348 discloses an evaporation gas treatment system for a liquefied hydrogen storage tank for ships.

The prior art relates to a technology for efficiently utilizing and storing boil-off gas generated from a liquefied hydrogen storage tank.

However, the prior art arranges a heat exchanger and a hydrogen absorption tank in the vacant space formed between the liquefied hydrogen storage tank and the hull floor. This space is limited and the thermal insulation effect is insufficient.

### Disclosure

### Technical Problem

An embodiment of the present invention is directed to providing a liquefied hydrogen fuel tank for ships, a connection part support system used therefor, a baffle with improved efficiency, and a vapor-cooled shield, all of which can significantly enhance thermal insulation performance in order to overcome the problems of the prior art.

### Technical Solution

According to one aspect of the present invention, there is provided a liquefied hydrogen fuel tank for ships comprising; an inner tank in which cryogenic liquid is stored; a vapor-cooled shield enclosing the inner tank from the outside, one end of a plurality of connection parts being connected to the vapor-cooled shield and the other end being connected to the inner tank; a pipe member provided outside the vapor-cooled shield; and an outer tank enclosing the pipe member from the outside, wherein the pipe member insulates the inner tank by hydrogen that is vaporized and discharged.

The material of the vapor-cooled shield is copper.

The pipe member is provided in a straight shape from one end to the other end outside of the vapor-cooled shield.

The pipe member is wound in a spiral shape from one end to the other end outside the vapor-cooled shield.

A vacuum state is maintained between the inner tank and the vapor-cooled shield, and between the outer tank and the vapor-cooled shield, respectively.

The liquefied hydrogen fuel tank for ships comprises a connection part support system for supporting the connection part, wherein the connection part support system comprising; an inner support configured to surround a portion of the connection part; a head coupled to an inner circumferential surface of one end of the inner support and formed to contact an end of the connection part when the connection part is coupled to the inner support; and an outer support configured to surround the inner support and having one end connected to the other end of the inner support, wherein the other end of the outer support is in contact with the inner tank or the outer tank.

The inner support comprises a support portion formed to protrude by a predetermined length from the other end thereof toward the opposite side of the connection part, and the outer support has one end connected to the inner support through the support portion.

The inner support is spaced apart by a predetermined distance such that its inner surface does not contact an outer circumferential surface of the connection part, and the outer support is connected to the inner support such that its inner surface is spaced apart by a predetermined distance from an outer surface of the inner support.

At least one of the inner support and the outer support has a plurality of holes formed on its side surface.

The plurality of holes are formed to have the same size and uniform spacing.

The liquefied hydrogen fuel tank for ships comprises a connection part support system for supporting the connection part, wherein the connection part support system comprising; an inner support formed to surround a portion of the connection part and comprising a head formed on an inner circumferential surface at a predetermined position such that an end of the connection part can contact the head when the connection part is coupled; and an outer support formed to surround the inner support, one end of which is connected to the other end of the inner support, wherein the other end of the outer support contacts the inner tank or the outer tank.

At least one of the inner support and the outer support has a plurality of holes formed on its side surface.

The plurality of holes are formed to have the same size and uniform spacing.

The liquefied hydrogen fuel tank for ships comprises a connection part support system for supporting the connection part, wherein the connection part support system comprising; an inner support formed to surround a portion of the connection part and comprising a head formed on an inner circumferential surface at a predetermined position such that an end of the connection part can contact the head when the connection part is coupled; and an outer support formed to surround the inner support, one end of which is connected to the other end of the inner support, wherein the other end of the outer support contacts the inner tank or the outer tank.

The liquefied hydrogen fuel tank for ships comprises a connection part support system for supporting the connection part, wherein the connection part support system comprising; a first support system provided on one side of the connection part; and a second support system provided on the other side of the connection part, wherein at least one of the first support system and the second support system comprising; an inner support formed to surround a portion of the connection part; a head coupled to an inner circumferential surface of one end of the inner support and formed to contact an end of the connection part when the connection part is coupled to the inner support; and an outer support formed to surround the inner support, one end of which is connected to the other end of the inner support, wherein the other end of the outer support contacts the inner tank or the outer tank.

The liquefied hydrogen fuel tank for ships comprises a connection part support system for supporting the connection part, wherein the connection part support system comprising: an inner support formed to surround a portion of the connection part; a head coupled to an inner circumferential surface of one end of the inner support and formed to contact an end of the connection part when the connection part is coupled to the inner support; and an outer support formed to surround the inner support, one end of which is connected to the other end of the inner support, wherein the other end of the outer support contacts the inner tank or the outer tank.

The liquefied hydrogen fuel tank for ships comprises a connection part support system for supporting the connection part, wherein the connection part support system comprising; a first support system provided on one side of the connection part; and a second support system provided on the other side of the connection part, wherein at least one of the first support system and the second support system comprising; an inner support formed to surround a portion of the connection part; a head coupled to an inner circumferential surface of one end of the inner support and formed to contact an end of the connection part when the connection part is coupled to the inner support; and an outer support formed to surround the inner support, one end of which is connected to the other end of the inner support, wherein the other end of the outer support contacts the inner tank or the outer tank.

The liquefied hydrogen fuel tank for ships comprises a connection part support system for supporting the connection part, wherein the connection part support system comprising: an inner support formed to surround a portion of the connection part; a head coupled to an inner circumferential surface of one end of the inner support and formed to contact an end of the connection part when the connection part is coupled to the inner support; and an outer support formed to surround the inner support, one end of which is connected to the other end of the inner support, wherein the other end of the outer support contacts the inner tank or the outer tank.

The liquefied hydrogen fuel tank for ships comprises a baffle provided inside the liquefied hydrogen fuel tank, wherein the baffle comprises a plurality of panels arranged in the height direction of the inner tank, each having both ends fixedly coupled to the inner wall of the inner tank, wherein at least one of the plurality of panels is formed such that the upper and lower ends are spaced apart by a predetermined distance from adjacent panels or the inner wall of the inner tank.

A first panel, being any one of the plurality of panels, comprises a reinforcing portion formed by bending at least a part of the upper or lower end at least once in the height direction of the inner tank.

A first panel, being any one of the plurality of panels, comprises bent surfaces formed by bending both ends by a predetermined length, and is fixedly coupled to the inner wall of the inner tank through the bent surfaces.

The bent surfaces are cut at least once and divided into a plurality of parts.

The first panel comprises a reinforcing portion formed by bending at least one of an upper end or a lower end by a predetermined length, wherein the reinforcing portion is formed by being bent in a direction opposite to the bent surfaces with respect to the longitudinal direction of the inner tank.

The liquefied hydrogen fuel tank for ships comprises a baffle provided inside the liquefied hydrogen fuel tank, wherein the baffle comprises a panel arranged in the height direction of the inner tank, both ends of which are fixedly coupled to the inner wall of the inner tank, wherein the panel is formed such that its upper and lower ends are spaced apart by a predetermined distance from the inner wall of the inner tank.

The panel comprises at least one hole having a predetermined height and extending in the width direction of the inner tank, wherein the at least one hole is formed such that both ends thereof are positioned within a predetermined distance from both side edges of the panel.

The liquefied hydrogen fuel tank for ships comprises a storage portion in which a fluid is stored; and a baffle provided inside the inner tank, wherein the baffle comprises a plurality of panels arranged in the height direction of the inner tank, each having both ends fixedly coupled to the inner wall of the inner tank, wherein at least one of the plurality of panels is formed such that its upper and lower ends are spaced apart by a predetermined distance from an adjacent panel or the inner wall of the inner tank.

### Advantageous Effects

The liquefied hydrogen fuel tank for ships, the connection part support system used therefor, the baffle with improved efficiency, and the vapor-cooled shield according to the present invention provide the following effects.

First, the thermal insulation performance can be improved by rerouting the heat transfer path to the outside.

Second, thermal efficiency can be improved by utilizing waste heat.

Third, the structure is simple, allowing improvement of thermal insulation performance at low cost.

Fourth, by increasing the heat conduction path without compromising the connection strength between the inner tank and the outer tank, heat conduction through the connection parts can be effectively suppressed.

Fifth, the baffle configured as a combination of a plurality of panels to prevent excessive sloshing of the fluid contained inside the liquefied hydrogen fuel tank for ships provides not only an effective sloshing suppression effect but also advantageous effects of easy installation and maintenance.

### Description of Drawings

Figure 1 is a schematic diagram illustrating a cryogenic fluid storage tank.
Figure 2 is a schematic cross-sectional view of the storage tank shown in Figure 1.
Figure 3 is a schematic diagram illustrating a conventional baffle provided in the storage tank.
Figure 4 is a schematic diagram illustrating an internal structure of a liquefied hydrogen fuel tank for ships according to one embodiment of the present invention.
Figure 5 is a schematic diagram illustrating a vapor-cooled shield and an A-A cross-sectional view of a liquefied hydrogen fuel tank for ships according to one embodiment of the present invention.
Figure 6 illustrates a schematic configuration of a connection part support system of a liquefied hydrogen fuel tank for ships according to one embodiment of the present invention.
Figure 7 is a cross-sectional view of a connection part support system of a liquefied hydrogen fuel tank for ships according to one embodiment of the present invention.
Figure 8 is a diagram illustrating the inner support and the outer support of the connection part support system of a liquefied hydrogen fuel tank for ships according to one embodiment of the present invention.
Figure 9 is a diagram illustrating a heat conduction path in the connection part support system of a liquefied hydrogen fuel tank for ships according to one embodiment of the present invention.
Figure 10 illustrates an implementation example of an improved-efficiency baffle according to one embodiment of the present invention.
Figure 11 illustrates a schematic configuration of an improved-efficiency baffle according to one embodiment of the present invention.
Figure 12 is a diagram illustrating bent surfaces and a reinforcing portion of an improved-efficiency baffle according to one embodiment of the present invention.
Figures 13 and 14 respectively illustrate implementation examples of improved-efficiency baffles according to other embodiments of the present invention.
Figure 15 is a schematic diagram showing the temperature in the case where a straight pipe member is applied to the liquefied hydrogen fuel tank for ships according to one embodiment of the present invention.
Figure 16 is a schematic diagram showing the temperature in the case where a spiral pipe member is applied to the liquefied hydrogen fuel tank for ships according to one embodiment of the present invention.

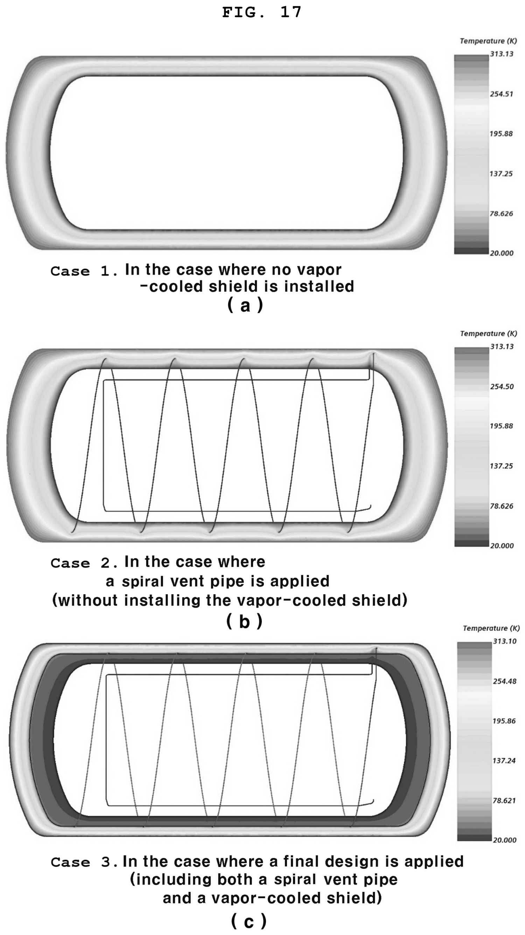

Figure 17(a) is a schematic diagram showing the temperature in the case where the vapor-cooled shield is not applied to the liquefied hydrogen fuel tank for ships according to one embodiment of the present invention, figure 17(b) is a schematic diagram showing the temperature in the case where the vapor-cooled shield is not installed and a spiral pipe member is applied, and figure 17(c) is a schematic diagram showing the temperature in the case where both the vapor-cooled shield and the spiral pipe member are applied to the liquefied hydrogen fuel tank for ships according to one embodiment of the present invention.
Figure 18 is a graph illustrating the thermal insulation performance for each of the cases shown in Figures 17(a) to 17(c).

### Best Mode

The following described embodiments are provided to enable those skilled in the art to easily understand the technical concept of the present invention, and are not intended to limit the scope of the present invention. In addition, the matters depicted in the accompanying drawings are schematic illustrations provided to facilitate the explanation of the embodiments of the present invention and may differ from the actual forms implemented.

When it is mentioned that a certain component is connected or coupled to another component, it should be understood that the connection or coupling may be direct, or there may be one or more other components present in between.

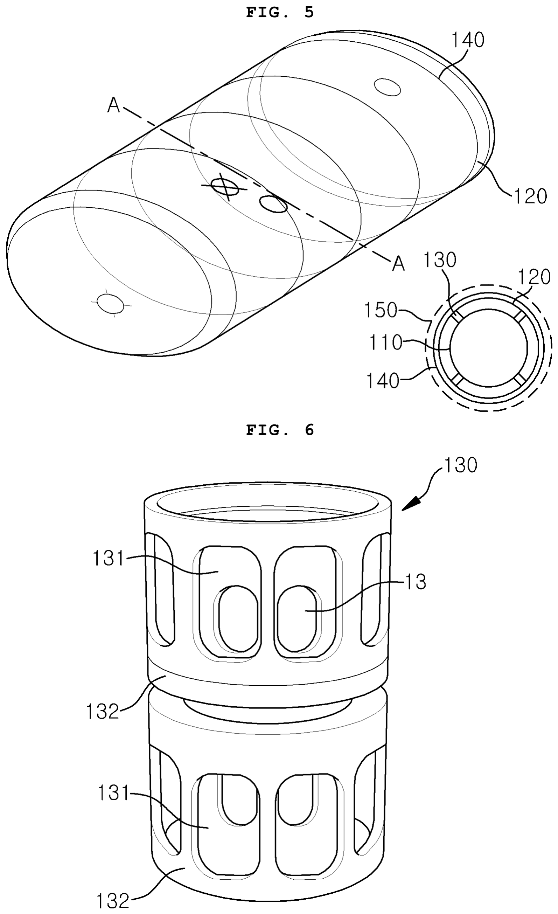

Figure 4 is a schematic diagram illustrating an internal structure of a liquefied hydrogen fuel tank for ships according to one embodiment of the present invention, and Figure 5 is a schematic diagram illustrating a vapor-cooled shield and a cross-sectional view of a liquefied hydrogen fuel tank for ships according to one embodiment of the present invention.

Referring to Figures 4 and 5 together with Figures 1 to 3, a liquefied hydrogen fuel tank for ships according to one embodiment of the present invention comprises: an inner tank (110) in which cryogenic fluid is stored; a vapor-cooled shield (120) enclosing the inner tank (110) from the outside; a plurality of connection parts (13) connecting between the inner tank (110) and the vapor-cooled shield (120); a pipe member (vent pipe) (140) provided outside the vapor-cooled shield (120); and an outer tank (150) enclosing the pipe member (140) from the outside, wherein the pipe member (140) is configured to insulate the inner tank (110) from the outside air by hydrogen vaporized and discharged, thereby improving the insulation performance.

The inner tank (110) is a cylindrical structure having a storage portion, which is a receiving space formed inside, and it is preferably installed with its longitudinal direction along the ground. The inner tank (110) has an elongated shape with a length longer than its diameter, and stores cryogenic fluid such as liquefied hydrogen inside.

The vapor-cooled shield (120) is preferably made of copper. The vapor-cooled shield (120) is configured to enclose the inner tank (110) from the outside.

The vapor-cooled shield (120) has a cylindrical shape with a diameter larger than that of the inner tank (110). The vapor-cooled shield (120) is connected to the inner tank (110) by a plurality of connection parts (13).

A plurality of connection parts (13) are provided spaced apart in the circumferential direction around the axis of the liquefied hydrogen fuel tank for ships, with some supporting the lower portion.

One end of the plurality of connection parts (13) is connected to the outer surface of the inner tank (110), and the other end of the plurality of connection parts (13) is connected to the inner surface of the vapor-cooled shield (120).

The pipe member (140) has a long pipe shape through which vaporized hydrogen flows.

The pipe member (140) is provided in a straight shape extending from one end on the outside of the vapor-cooled shield (120) toward the other end. A plurality of straight pipe members (140) may be connected and installed in the circumferential direction around the center of the inner tank (110).

Alternatively, the pipe member (140) is wound in a spiral shape from one end on the outside of the vapor-cooled shield (120) toward the other end. Reducing the spacing of the spiral winding can further improve the insulation performance.

According to the present invention, the steel applied to the inner tank (110) and the outer tank (150) of the liquefied hydrogen fuel tank for ships may be STS316L steel, which is directly applicable for liquefied hydrogen storage, and STS316HN steel, which has improved resistance to cryogenic hydrogen embrittlement, respectively.

According to the present invention, a vacuum is maintained between the inner tank (110) and the vapor-cooled shield (120), and between the outer tank (150) and the vapor-cooled shield (120) of the liquefied hydrogen fuel tank for ships. Each of the vacuum spaces more effectively blocks heat transfer.

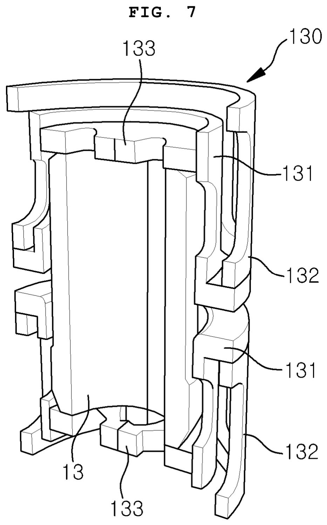

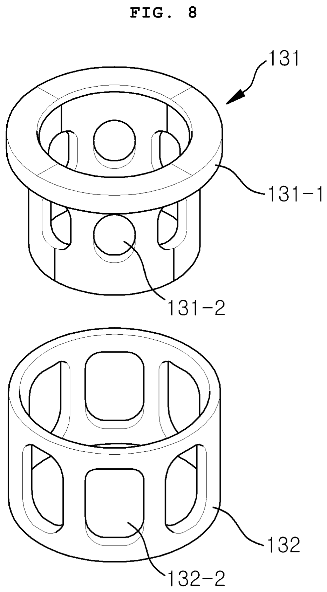

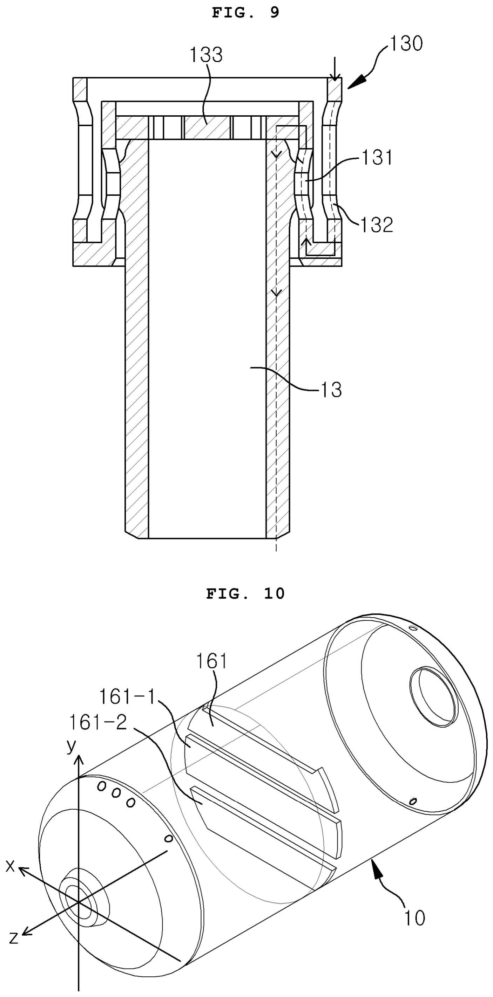

Figure 6 illustrates a schematic configuration of a connection part support system of a liquefied hydrogen fuel tank for ships according to one embodiment of the present invention, Figure 7 is a cross-sectional view of a connection part support system of a liquefied hydrogen fuel tank for ships according to one embodiment of the present invention, Figure 8 is a diagram illustrating the inner support and the outer support of the connection part support system of a liquefied hydrogen fuel tank for ships according to one embodiment of the present invention, and Figure 9 is a diagram illustrating a heat conduction path in the connection part support system of a liquefied hydrogen fuel tank for ships according to one embodiment of the present invention.

Referring to Figures 6 to 9 together with Figures 1 to 5, a connection part support system is provided in the connection part of a liquefied hydrogen fuel tank for ships according to one embodiment of the present invention.

A connection part support system (130) of a liquefied hydrogen fuel tank for ships according to one embodiment of the present invention includes: an inner support (131) formed to surround a portion of the connection part (13) connecting between the inner tank (110), in which cryogenic fluid is stored, and the vapor-cooled shield (120); a head (133) coupled to an inner circumferential surface of one end of the inner support (131), configured to contact an end of the connection part (13) when the connection part (13) is coupled to the inner support (131); and/or an outer support (132) formed to surround the inner support (131), one end of which is connected to the other end of the inner support (131). Here, the support may mean to enhance the support strength of the connection part.

The connection part (13) may also be used to connect between the vapor-cooled shield (120) and the outer tank (150). A connection part support system (130) may be provided for each of the plurality of connection parts (13) used in this manner, and the following description relates to the case where the connection part is used to connect between the inner tank (110) and the vapor-cooled shield (120). When one end of the connection part (13) with the installed connection part support system (130) is installed to contact the vapor-cooled shield (120), the other end may contact the inner tank (110) or the outer tank (150).

The inner support (131) may include a support portion (131-1) formed to protrude a predetermined length toward the opposite side of the connection part (13) at the other end (i.e., the end opposite to the end where the head (133) is located). The outer support (132) may be implemented such that one end is connected via the support portion (131-1).

The head (133) may be implemented separately from the inner support (131) and coupled to the inner circumferential surface of one end of the inner support (131) as described above. Alternatively, depending on the embodiment, the head (133) may be integrally formed with the inner support (131). In any case, when the head (133) is coupled to the inner support (131), it contacts the end of the connection part (13), thereby receiving heat transferred through the connection part (13) or serving to support the connection part (13).

Meanwhile, in this specification, the term "end" may be used to refer to a predetermined range extending from the tip of a component having a predetermined length (e.g., the connection part (13), the inner support (131), the outer support (132), etc.). For example, one end of the inner support (131) may mean a predetermined range extending from the end of the inner support (131) toward the central portion in the longitudinal direction.

The connection part (13) is generally made of G-10 material. G-10 is a type of composite material known as highpressure glass fiber laminate, which has low thermal conductivity and sufficient strength, making it suitable as a material for the connection part (13) that connects the inner tank and the outer tank. Here, the inner and outer tanks refer to the inner tank and the outer tank, respectively.

However, since G-10 cannot be directly welded to the metal material of the storage tank, conventionally, the inner and outer tanks were connected by fixing both ends of the connection part (13)-that is, the outer wall side end of the inner tank and the inner wall side end of the outer tank-using predetermined fastening means.

However, in such conventional methods, heat is directly conducted through the connection part (13), often causing the aforementioned problems.

Accordingly, the present invention aims to suppress the rapid escape of cold from the inner tank (110) to the outside or the rapid inflow of external heat into the inner tank (110) by extending the heat conduction path through the connection part (13) between the inner and outer tanks.

In the drawings, the connection part (13) is shown in a vertically standing state, with connection part support systems (130) according to one embodiment of the present invention provided at both the upper and lower parts of the connection part (13). However, the connection part (13) is not fixed in any particular direction. For convenience of explanation, the description focuses on the connection part support system (130) provided on one side, either the lower or upper part of the connection part (13) in the drawings, but it goes without saying that the other connection part support systems (130), which are not described in detail, have the same structure and perform the same functions.

As described above, a connection part support system (130) according to one embodiment of the present invention may include an inner support (131), an outer support (132), and/or a head (133).

An inner support (131) formed to surround a portion of the upper end of the connection part (13) connecting the inner and outer tanks of the storage tank, a support portion (131-1) formed to protrude outward (opposite to the connection part (13)) from the end of the inner support (131), and an outer support (132) having one end connected to the support portion (131-1) are illustrated. The other end of the outer support (132) may be connected to the inner tank (110) or the vapor-cooled shield (120). In addition, when the connection part (13) is coupled inside the inner support (131), a head (133) that contacts the end of the connection part (13) may be coupled to the inner circumferential surface of one end of the inner support (131). This structure can be similarly implemented at the lower end of the connection part (13).

In a connection part support system (130) according to one embodiment of the present invention, only the outer support (132) may be in direct contact with the inner tank (110) and/or the vapor-cooled shield (120). That is, among the components constituting the connection part support system (130), other components such as the inner support (131) and/or the head (133) do not contact the inner tank (110) and/or the vapor-cooled shield (120), and only the outer support (132) may contact the inner tank (110) and/or the vapor-cooled shield (120). When the connection part support system (130) is provided between the vapor-cooled shield (120) and the outer tank (150), it may be in contact with the vapor-cooled shield (120) and/or the outer tank (150).

In an embodiment of the present invention, the inner support (131) and the outer support (132) may be formed such that, except for the connection through the support portion (131-1) described later, the remaining side portions do not contact each other and are spaced apart by a predetermined distance.

This is intended to extend the heat conduction path through the connection part support system (130) and the connection part (13). If the side portions of the inner support (131) and the outer support (132) come into contact with each other, heat may be conducted through the contact area, making the extension of the heat transfer path practically meaningless.

Therefore, it is preferable that the side portion of the inner support (131) is implemented so as not to contact the outer circumferential surface of the connection part (13) and the inner circumferential surface of the outer support (132), respectively.

A connection part support system (130) of a liquefied hydrogen fuel tank for ships according to one embodiment of the present invention may include: an inner support (131) formed to surround a portion of the end of the connection part (13) connecting the inner tank (110) and the vapor-cooled shield (120); and an outer support (132) formed to surround the inner support (131) and connected to a support portion (131-1) formed on one end of the inner support (131).

According to one embodiment, a plurality of holes (131-2, 132-2) may be formed on the side portions of the inner support (131) and the outer support (132).

The plurality of holes (131-2, 132-2) may serve to reduce the cross-sectional area through which heat is conducted via the inner support (131) and the outer support (132).

However, since the support strength of the inner support (131) and the outer support (132) may be weakened depending on the size and number of holes (131-2, 132-2), it is preferable that the plurality of holes (131-2, 132-2) are formed to reduce the cross-sectional area for heat conduction while maintaining sufficient support strength to support the connection between the inner tank (110) and the vapor-cooled shield (120). In addition, for the same reason, it is preferable that the plurality of holes (131-2, 132-2) are uniformly arranged with all holes having the same size.

In this specification, eight holes (131-2, 132-2) are uniformly formed in each of the inner support (131) and/or the outer support (132), but the present invention is not limited thereto. The plurality of holes (131-2, 132-2) may be variously formed depending on various conditions such as the material, volume, diameter, and required support strength of the inner support (131) and/or the outer support (132).

In addition, the plurality of holes (131-2, 132-2) may have not only the rectangular cross-section with rounded corners illustrated in the drawings but also various other shapes, which would be readily understood by those skilled in the art to which the present invention pertains.

The inner support (131) and the outer support (132) are exemplified as being coupled to the lower side of the connection part (13) positioned vertically with respect to the ground, but the inner support (131) and the outer support (132) coupled to the opposite side of the connection part (13) may also be formed with the same structure.

That is, according to an embodiment of the present invention, connection part support systems (130) are provided at both ends of the connection part (13), so that two connection part support systems (130) may be provided on a single connection part (13).

In the embodiment illustrated in the drawings, one end of the inner support (131), that is, the upper end in the drawings, may be formed with a support portion (131-1) to which the upper end of the outer support (132) is connected.

In addition, a head (133) is coupled along the inner circumferential surface of the lower end of the inner support (131) so that, when the connection part (13) is coupled to the inner support (131), the coupled connection part (13) is supported.

When the connection part (13) is coupled to the inner support (131), the connection part (13) and the inner support (131) do not necessarily need to be in tight contact or fixedly joined.

Depending on the embodiment, the connection part (13) and the inner support (131) may be in tight contact or fixedly joined to each other. However, in an embodiment of the present invention, the connection part (13) may be coupled inside the inner support (131) in a sliding coupling manner. Although the drawings illustrate the connection part (13) and the inner support (131) in tight contact without any gap, in actual implementation, a certain level of clearance between the connection part (13) and the inner support (131) may be acceptable.

In one embodiment, the inner support (131), the outer support (132), and/or the head (133) may be formed of a metal material having sufficient strength and relatively low thermal conductivity, which is weldable. For example, the inner support (131), the outer support (132), and/or the head (133) may each be formed of stainless steel. In such a case, each component may be connected (joined) to each other by welding, and the outer support (132) may also be joined to the inner tank (110) and/or the vapor-cooled shield (120) by welding. Of course, the inner support (131), the outer support (132), the head (133), and/or the inner tank (110) and the vapor-cooled shield (120) may be joined in various ways according to their materials or properties, as long as sufficient strength for fixing is ensured beyond welding.

Meanwhile, according to an embodiment, the inner support (131) may be implemented such that the head (133) is integrally formed at one end.

That is, the inner support (131) and the head (133) may be implemented as separate components that are coupled to each other, or the head (133) may be integrally extended and formed at a predetermined position at one end of the inner support (131). In any case, the head (133) is formed to contact the end of the connection part (13) or to support the end of the connection part (13) when the connection part (13) is coupled to the inner support (131).

When heat is conducted from the outside toward the inner tank (110), conventionally, heat is directly conducted through the connection part (13) toward the inner tank (110). However, according to the present invention, heat is first conducted through the outer support (132) connected (joined) to the vapor-cooled shield (120), and then conducted to the inner support (131) through the support portion (131-1) of the inner support (131) connected to the outer support (132). The heat conducted along the inner support (131) passes the head (133) before finally reaching the connection part (13).

When heat is subsequently conducted through the connection part (13), the connection part support system (130) coupled to the lower side of the connection part (13) further extends the heat conduction path. That is, the heat conducted to the connection part (13) through the aforementioned process is conducted from the head (133) installed at the lower end of the connection part (13) to the inner support (131), then conducted again through the support portion (131-1) of the inner support (131) to the outer support (132) connected thereto, and only then can heat be conducted to the inner tank (110).

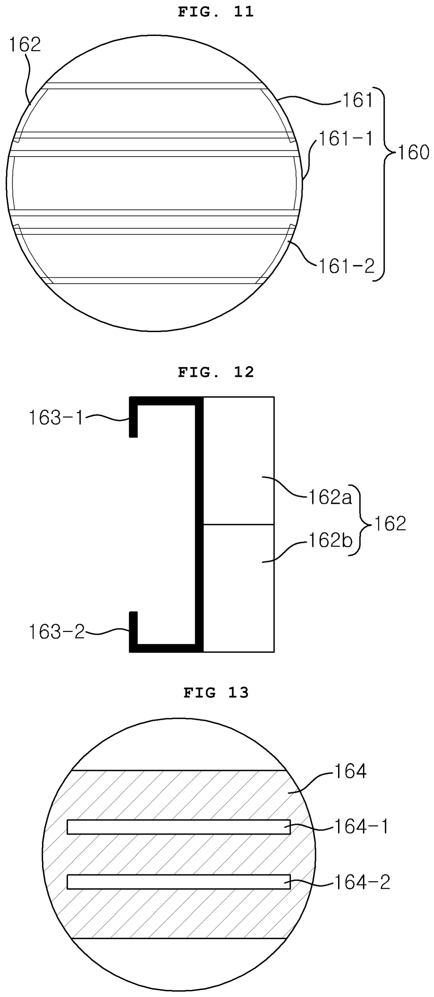

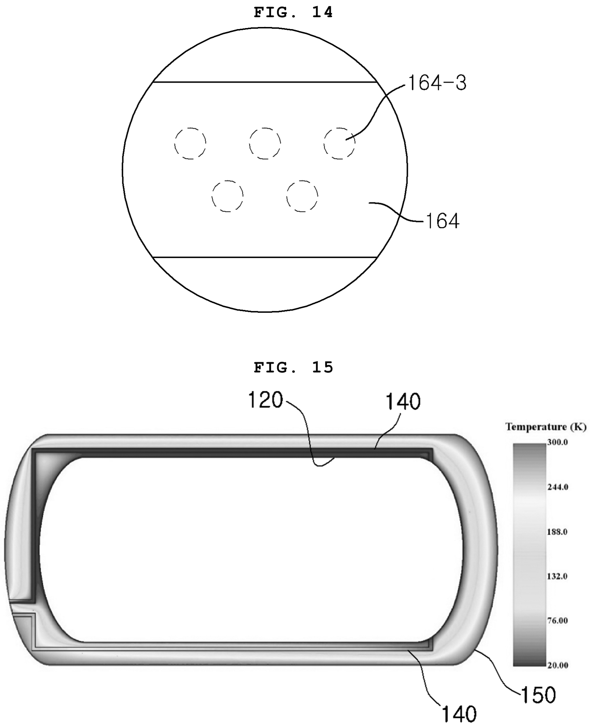

Figure 10 illustrates an implementation example of an improved-efficiency baffle according to one embodiment of the present invention, Figure 11 illustrates a schematic configuration of an improved-efficiency baffle according to one embodiment of the present invention, Figure 12 is a diagram illustrating bent surfaces and a reinforcing portion of an improved-efficiency baffle according to one embodiment of the present invention, and Figures 13 and 14 respectively illustrate implementation examples of improved-efficiency baffles according to other embodiments of the present invention.

Referring to Figures 10 and 11, an improved efficiency baffle (160) according to one embodiment of the present invention can be installed in a liquefied hydrogen fuel tank for ships according to the present invention, and can also be installed in conventionally used storage tanks.

An improved efficiency baffle (160) according to one embodiment of the present invention may include a plurality of panels (161, 161-1, 161-2) provided on the inner wall of an inner tank where a predetermined fluid is stored. According to an embodiment, the improved efficiency baffle (160) may be configured to include only a single panel instead of a plurality of panels (161, 161-1, 161-2).

For convenience of description in this specification, the direction perpendicular to the ground, the y-axis, is defined as the height direction of the storage tank; the direction parallel to the ground, the x-axis, is defined as the width direction of the storage tank; and the direction parallel to the ground passing through the storage tank, the z-axis, is defined as the length direction of the storage tank.

In this specification, the fluid may refer to a cryogenic fluid, which is a liquefied gas in a liquefied state. Hereinafter, the fluid will be described by way of example as liquefied hydrogen in which hydrogen is liquefied, but the present invention is not limited thereto. For example, the fluid may be various types of cryogenic fluids such as liquefied nitrogen, liquefied helium, liquefied natural gas, or may broadly include fuels such as gasoline, diesel, or various other types of liquids. Regardless of the type of such fluids, it will be readily understood by those skilled in the art to which the present invention pertains that the technical idea of the present invention described below can be applied.

In particular, when the fluid is a cryogenic fluid such as liquefied hydrogen, the sloshing of the fluid inside the storage tank can cause the generation of boil-off gas, requiring special attention.

For example, in the case of cryogenic fluids, the upper portion of a storage tank not filled with cryogenic fluid inevitably becomes relatively warmer compared to the cryogenic fluid. When the cryogenic fluid inside the storage tank sloshes excessively, it repeatedly passes through the relatively warmer upper section of the storage tank, which can result in an increase in the temperature of the cryogenic fluid and cause vaporization. This facilitates the generation of boil-off gas, which may significantly reduce the transportation and/or storage efficiency of the cryogenic fluid.

According to one embodiment of the present invention, the storage tank may be configured to include an inner tank in which the fluid is stored, and an outer tank spaced apart from the inner tank by a predetermined distance to surround the inner tank. In this case, unless otherwise specified, the term "storage tank" when describing the improved efficiency baffle may refer to the inner tank where the fluid is directly stored.

Depending on the embodiment, the storage tank may be formed as a single tank, or there may be cases where the physical distinction between the inner tank and the outer tank is practically difficult. In such cases as well, the technical concept of the present invention can be applied equally.

The storage tank may be mounted on a predetermined transportation means for transporting cryogenic fluids. The transportation means may be implemented as any type of vehicle capable of transporting various liquids, such as a tanker truck or a ship. When the technical concept of the present invention described below is applied, more stable transportation of the fluid can be achieved.

As described above, when the storage tank is mounted on a transportation means and transported, excessive sloshing of the fluid stored inside the storage tank may occur due to road or water surface conditions or the operation of the transportation means (e.g., sudden stops, rapid starts, sharp turns). It is well known that various types of baffles (sloshing baffles) are used in storage tanks mounted on transportation means to suppress such excessive sloshing of the fluid during transportation. These baffles are applied in various shapes and quantities depending on the volume of the storage tank and other requirements.

Conventional baffles, particularly those provided in storage tanks mounted on transportation means, typically have a single plate shape matching the inner diameter of the storage tank, with the plate edge being closely joined to the inner wall of the storage tank by welding or other methods without gaps. In addition, these plates are usually perforated to form a plurality of holes.

While conventional baffles can suppress excessive fluid sloshing inside storage tanks to some extent, the present invention aims to provide a baffle that is more efficient and better at suppressing fluid sloshing compared to conventional baffles.

An improved efficiency baffle (160) according to one embodiment of the present invention, unlike conventional general baffles, may be implemented such that a plurality of panels (161, 161-1, 161-2) having a predetermined width form a single baffle (160) as described above. The plurality of panels (161, 161-1, 161-2) are arranged side by side in the height direction of the storage tank (e.g., the y-axis direction), and both ends can be fixedly coupled to the inner wall of the storage tank.

At this time, the plurality of panels (161, 161-1, 161-2) may be spaced apart from each other by predetermined intervals.

For example, among the plurality of panels (161, 161-1, 161-2), the first panel (161) may be formed such that its upper and lower ends are spaced apart by predetermined distances from the adjacent panels (161-1, 161-2) and/or the inner wall of the storage tank. Although the drawings illustrate the plurality of panels (161, 161-1, 161-2) arranged to be spaced at uniform intervals, the present invention is not limited thereto. For instance, when the first panel (161) and the second panel (161-1) are spaced apart by a predetermined distance, the second panel (161-1) and the third panel (161-2) may be spaced apart by the same distance or by different distances. According to an embodiment, the first panel (161) and the second panel (161-1) may be spaced apart, while the second panel (161-1) and the third panel (161-2) are not spaced and their respective upper and/or lower ends are in contact. In any case, according to the technical concept of the present invention, at least one of the plurality of panels (161, 161-1, 161-2) may be implemented to be spaced apart by a predetermined distance from the adjacent panel and/or the inner wall of the storage tank.

For convenience of explanation in this specification, the panel (110) located at the topmost position is described as the first panel; however, the first panel does not necessarily mean the panel positioned at the topmost among the plurality of panels (161, 161-1, 161-2).

Also, although the improved efficiency baffle (160) is described by way of example as being composed of three panels (161, 161-1, 161-2) in this specification, the number of panels is not necessarily limited thereto. The improved efficiency baffle (160) may be composed of a single panel, or two panels, or, according to embodiments, may include four or more panels.

In this way, the fluid stored inside the storage tank can move through the gaps spaced apart between the plurality of panels (161, 161-1, 161-2) and/or between the panels and the inner wall of the storage tank. That is, the gaps between the plurality of panels (161, 161-1, 161-2) can perform the same or similar function as the holes perforated in conventional baffles.

In the conventional case where a single baffle is composed of one plate matching the inner diameter of the storage tank and its edges are not all joined to the inner wall of the storage tank, when configured as in the present invention with a plurality of panels (161, 161-1, 161-2), installation and maintenance can be facilitated.

According to the technical concept of the present invention, the upper side of the panel located at the top among the plurality of panels (161, 161-1, 161-2) (for example, the first panel (161)) and the lower side of the panel located at the bottom (for example, the third panel (161-2)) may each be spaced apart from the inner wall of the storage tank.

Generally, storage tanks for storing fluids often have a circular cross-section, and accordingly, the upper side of the panel positioned at the top (for example, the first panel (161)) and the lower side of the panel positioned at the bottom (for example, the third panel (161-2)) may be spaced apart from the inner wall of the storage tank by relatively wide gaps.

This allows the flow of fluid and gas (for example, vaporized fluid) at both the lower and upper parts of the baffle (160) to proceed relatively smoothly compared to conventional baffles, while the fluid surface can be effectively restrained from sloshing by the panels (161, 161-1, 161-2) and the gaps between them.

Figure 12 is a diagram illustrating bent surfaces and a reinforcing portion of an improved-efficiency baffle according to one embodiment of the present invention.

Referring to FIG. 12, a first panel (161) among the plurality of panels (161, 161-1, 161-2) constituting the efficiency-enhanced baffle (160) according to one embodiment of the present invention may have bent surfaces (162) bent at both ends in the longitudinal direction of the storage tank.

For example, the first panel (161) may be fixedly coupled to the inner wall of the storage tank through bent surfaces (162) formed by bending both ends.

In one embodiment, since the storage tank often has a circular cross-section as described above, the bent surfaces (162) may be cut at least at one location to be divided into two or more parts (162a, 162b) in order to be fixedly coupled to the curved inner wall of the storage tank.

On the other hand, unlike conventional baffles where the first panel (161) is formed as a single plate shape with the entire edge fixed to the inner wall of the storage tank, only the bent surfaces (162) at both ends are fixedly coupled to the inner wall of the storage tank. Therefore, there may be a risk of damage such as cracks or bending at the upper or lower ends due to impacts or shifting caused by fluid flow or sloshing.

To prevent such damage risks, the first panel (161) may be formed to include reinforcing portions (163-1, 163-2).

The reinforcing portions (163-1, 163-2) may be formed by bending at least once a part of the upper and/or lower end of the first panel (161) in the height direction of the storage tank.

For example, as shown in the drawings, a part of the upper end of the first panel (161) may be bent downward in the height direction of the storage tank by a predetermined angle (e.g., a right angle or an angle close to a right angle), and a portion of the bent part may be further bent by a predetermined angle (e.g., a right angle or an angle close to a right angle) to form the reinforcing portion (163-1). Here, the term "angle close to a right angle" means that the bending angle is not necessarily exactly 90 degrees but may be an angle close to 90 degrees within a certain range.

Meanwhile, as described above, the efficiency-enhanced baffle (160) according to the technical concept of the present invention may be formed of a single panel instead of multiple panels (161, 161-1, 161-2).

Figures 13 and 14 illustrate implementation examples of improved-efficiency baffles according to other embodiments of the present invention.

Referring first to FIG. 13, the efficiency-enhanced baffle (160) according to another embodiment of the present invention may be implemented in a form in which a single panel (164) is provided inside the storage tank.

The panel (164) is formed such that its upper and lower ends are spaced apart from the inner wall of the storage tank as shown in the drawing, and at least one hole (164-1, 164-2) may be perforated therein.

At this time, the at least one hole(s) (164-1, 164-2) may have a predetermined width and be formed elongated in the width direction of the storage tank, and both ends of the at least one hole(s) (164-1, 164-2) may be formed to be close to within a predetermined distance from both side edges of the panel (164).

In this case, although the panel (164) is not completely divided by the at least one hole(s) (164-1, 164-2), the at least one hole(s) (164-1, 164-2) can provide the same or similar effect as the gaps created by the plurality of panels (161, 161-1, 161-2) spaced apart by predetermined distances in the above-described embodiment.

In another embodiment of the present invention, the efficiency-enhanced baffle (160) may be formed of a single panel (164).

However, unlike the embodiment in which at least one hole (164-1, 164-2) is formed longitudinally along the width direction of the storage tank, the panel (164) may have no holes formed therein, or one or more second holes (164-3) of a predetermined size, similar to conventional baffles, may be formed.

The second hole (164-3) may be formed in a circular shape as shown by the dotted lines in the drawings, but its shape and size may be varied as needed.

In other embodiments of the present invention, even when an enhanced-efficiency baffle (160) is formed of a single panel (164), an upper end and a lower end of the panel (164) are configured to be spaced apart by a predetermined distance from an inner wall of the storage tank, so that fluid and/or gas stored in the storage tank can flow through a space separated from the inner wall of the storage tank.

Furthermore, even when the enhanced-efficiency baffle (160) is formed of a single panel (164), it is apparent that a reinforcing portion for preventing damage to the upper and/or lower end spaced apart from the inner wall of the storage tank may be formed in the same manner.

As such, the enhanced-efficiency baffle (160) may include a plurality of panels (161, 161-1, 161-2) forming the baffle, or a single panel (164) having both lateral ends coupled to an inner wall of the storage tank, with an upper end and a lower end formed to be spaced apart from adjacent panels and/or the inner wall of the storage tank, thereby providing the advantageous effect of more effectively suppressing sloshing of the fluid stored in the storage tank while also facilitating installation and maintenance.

Meanwhile, a storage tank provided with an enhanced-efficiency baffle (160) according to one embodiment of the present invention may be provided.

The storage tank may include a storage part in which fluid is stored, and a baffle provided inside the storage tank.

At this time, the baffle is arranged in the height direction of the storage tank as described above, and may include a plurality of panels (161, 161-1, 161-2) whose both ends are fixedly coupled to the inner wall of the storage tank. It is as described above that at least one upper and lower end of the plurality of panels (161, 161-1, 161-2) may be formed to be spaced apart by a predetermined distance from adjacent panels or the inner wall of the storage tank, respectively.

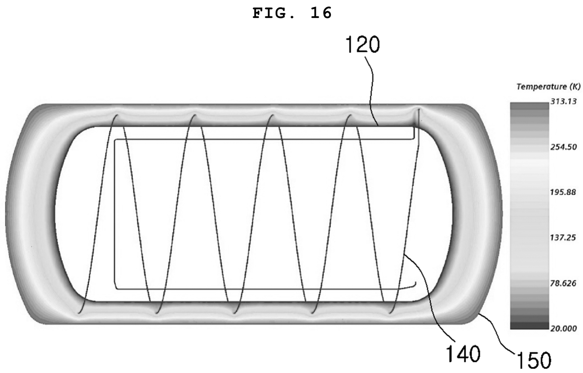

Figure 15 is a schematic diagram showing the temperature in the case where a straight pipe member is applied to the liquefied hydrogen fuel tank for ships according to one embodiment of the present invention, and Figure 16 is a schematic diagram showing the temperature in the case where a spiral pipe member is applied to the liquefied hydrogen fuel tank for ships according to one embodiment of the present invention.

Referring to Figures 15 and 16 together with other drawings, in Figure 15, the vapor-cooled shield (120) blocks external heat, and it can be seen that the portion where a straight pipe member (140) is provided on the vapor-cooled shield (120) has a significantly lower temperature compared to other portions.

Also, in Figure 16, the vapor-cooled shield (120) blocks external heat, and it can be seen that the portion where a spiral pipe member (140) is provided on the vapor-cooled shield (120) has a significantly lower temperature compared to other portions throughout the entire vapor-cooled shield (120).

Figure 17(a) is a schematic diagram showing the temperature in the case where the vapor-cooled shield is not applied to the liquefied hydrogen fuel tank for ships according to one embodiment of the present invention, figure 17(b) is a schematic diagram showing the temperature in the case where the vapor-cooled shield is not installed and a spiral pipe member is applied, and figure 17(c) is a schematic diagram showing the temperature in the case where both the vapor-cooled shield and the spiral pipe member are applied to the liquefied hydrogen fuel tank for ships according to one embodiment of the present invention.

Comparing the drawings, it can be seen that the temperature across the entire fuel tank is lower when a spiral pipe member is applied as shown in Figure 17(b) than when the vapor-cooled shield and pipe member are not installed as in Figure 17(a).

Furthermore, it can be seen that the temperature across the entire fuel tank is lower when both the vapor-cooled shield and the spiral pipe member are applied as shown in Figure 17(c) than when only the spiral pipe member is applied as in Figure 17(b).

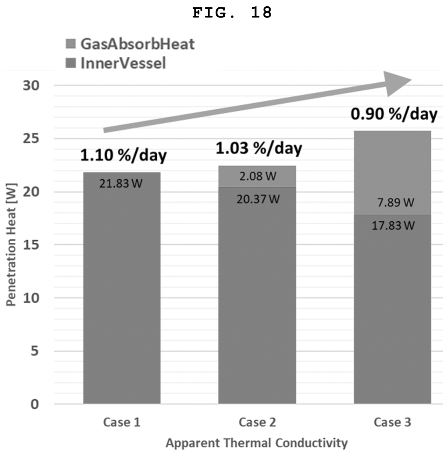

Figure 18 is a graph illustrating the thermal insulation performance for each of the cases shown in Figures 17(a) to 17(c).

Referring to Figure 18 together with Figure 17, thermal penetration and thermal conductivity were compared for each of the cases shown in Figures 17(a), 17(b), and 17(c).

Gas absorption heat (GasAbsorHeat) increased while the inner vessel decreased; as can be seen from the graph, high-temperature penetration heat and thermal conductivity were reduced, resulting in an insulation performance (BOR) improvement of 18.2%, reaching 0.90% per day.

In the BOR test using liquefied nitrogen, the BOR was 0.6% per day, and the BOR in a liquefied hydrogen fuel tank for ships was estimated to be 0.3 to 0.4% per day.

Therefore, the liquefied hydrogen fuel tank for ships according to the present invention can improve insulation performance by bypassing the heat transfer path to the outside, enhance thermal efficiency by utilizing waste heat, and improve insulation performance at low cost due to its simple structure.

Furthermore, by increasing the heat conduction path without impairing the connection strength between the inner tank and the outer tank, heat conduction through the connection part can be suppressed. Additionally, by implementing the baffle for preventing excessive sloshing of the fluid contained inside the liquefied hydrogen fuel tank for ships as a combination of a plurality of panels, advantageous effects such as suppression of fluid sloshing as well as ease of installation and maintenance are provided.

Those skilled in the art to which the present invention pertains will understand that the present invention may be embodied in other specific forms without changing the technical spirit or essential features thereof. Therefore, the embodiments described above are merely selected as the most preferred examples among various possible embodiments for the purpose of facilitating understanding by those skilled in the art. The technical spirit of the present invention is not necessarily limited or restricted to the embodiments presented, and various changes, additions, and modifications may be made without departing from the scope of the invention, and equivalent alternative embodiments are also possible.

### Industrial Applicability

The liquefied hydrogen fuel tank for ships, the connection part support system used therefor, the baffle with improved efficiency, and the vapor-cooled shield according to the present invention provide the following effects.

First, the thermal insulation performance can be improved by rerouting the heat transfer path to the outside.

Second, thermal efficiency can be improved by utilizing waste heat.

Third, the structure is simple, allowing improvement of thermal insulation performance at low cost.

Fourth, by increasing the heat conduction path without compromising the connection strength between the inner tank and the outer tank, heat conduction through the connection parts can be effectively suppressed.

Fifth, the baffle configured as a combination of a plurality of panels to prevent excessive sloshing of the fluid contained inside the liquefied hydrogen fuel tank for ships provides not only an effective sloshing suppression effect but also advantageous effects of easy installation and maintenance.

## Claims

1. A liquefied hydrogen fuel tank for ships comprising;
an inner tank in which cryogenic liquid is stored;
a vapor-cooled shield enclosing the inner tank from the outside, one end of a plurality of connection parts being connected to the vapor-cooled shield and the other end being connected to the inner tank;
a pipe member provided outside the vapor-cooled shield; and
an outer tank enclosing the pipe member from the outside,
wherein the pipe member insulates the inner tank by hydrogen that is vaporized and discharged.

2. The liquefied hydrogen fuel tank for ships according to claim 1, wherein the material of the vapor-cooled shield is copper.

3. The liquefied hydrogen fuel tank for ships according to claim 1, wherein the pipe member is provided in a straight shape from one end to the other end outside of the vapor-cooled shield.

4. The liquefied hydrogen fuel tank for ships according to claim 1, wherein the pipe member is wound in a spiral shape from one end to the other end outside the vapor-cooled shield.

5. The liquefied hydrogen fuel tank for ships according to claim 1, wherein a vacuum state is maintained between the inner tank and the vapor-cooled shield, and between the outer tank and the vapor-cooled shield, respectively.

6. The liquefied hydrogen fuel tank for ships according to claim 1, comprising a connection part support system for supporting the connection part,
wherein the connection part support system comprising;
an inner support configured to surround a portion of the connection part;
a head coupled to an inner circumferential surface of one end of the inner support and formed to contact an end of the connection part when the connection part is coupled to the inner support; and
an outer support configured to surround the inner support and having one end connected to the other end of the inner support,
wherein the other end of the outer support is in contact with the inner tank or the outer tank.

7. The liquefied hydrogen fuel tank for ships according to claim 6, wherein the inner support comprises a support portion formed to protrude by a predetermined length from the other end thereof toward the opposite side of the connection part, and the outer support has one end connected to the inner support through the support portion.

8. The liquefied hydrogen fuel tank for ships according to claim 6, wherein the inner support is spaced apart by a predetermined distance such that its inner surface does not contact an outer circumferential surface of the connection part, and the outer support is connected to the inner support such that its inner surface is spaced apart by a predetermined distance from an outer surface of the inner support.

9. The liquefied hydrogen fuel tank for ships according to claim 6, wherein at least one of the inner support or the outer support has a plurality of holes formed on a side surface.

10. The liquefied hydrogen fuel tank for ships according to claim 9, wherein the plurality of holes are formed to have the same size and uniform spacing.

11. The liquefied hydrogen fuel tank for ships according to claim 1, comprising a connection part support system for supporting the connection part,
wherein the connection part support system comprising;
an inner support formed to surround a portion of the connection part and comprising a head formed on an inner circumferential surface at a predetermined position such that an end of the connection part can contact the head when the connection part is coupled; and
an outer support formed to surround the inner support, one end of which is connected to the other end of the inner support,
wherein the other end of the outer support contacts the inner tank or the outer tank.

12. The liquefied hydrogen fuel tank for ships according to claim 1, comprising a connection part support system for supporting the connection part,
wherein the connection part support system comprising;
a first support system provided on one side of the connection part; and
a second support system provided on the other side of the connection part,
wherein at least one of the first support system or the second support system comprising;
an inner support formed to surround a portion of the connection part;
a head coupled to an inner circumferential surface of one end of the inner support and formed to contact an end of the connection part when the connection part is coupled to the inner support; and
an outer support formed to surround the inner support, one end of which is connected to the other end of the inner support,
wherein the other end of the outer support contacts the inner tank or the outer tank.

13. The liquefied hydrogen fuel tank for ships according to claim 1, comprising a connection part support system for supporting the connection part,
wherein the connection part support system comprising:
an inner support formed to surround a portion of the connection part;
a head coupled to an inner circumferential surface of one end of the inner support and formed to contact an end of the connection part when the connection part is coupled to the inner support; and
an outer support formed to surround the inner support, one end of which is connected to the other end of the inner support,
wherein the other end of the outer support contacts the inner tank or the outer tank.

14. The liquefied hydrogen fuel tank for ships according to claim 1, further comprising a baffle provided inside the liquefied hydrogen fuel tank,
wherein the baffle comprises a plurality of panels arranged in the height direction of the inner tank, each having both ends fixedly coupled to the inner wall of the inner tank,
wherein at least one of the plurality of panels is formed such that the upper and lower ends are spaced apart by a predetermined distance from adjacent panels or the inner wall of the inner tank.

15. The liquefied hydrogen fuel tank for ships according to claim 14, wherein a first panel, being any one of the plurality of panels, comprises a reinforcing portion formed by bending at least a part of the upper or lower end at least once in the height direction of the inner tank.

16. The liquefied hydrogen fuel tank for ships according to claim 14, wherein a first panel, being any one of the plurality of panels, comprises bent surfaces formed by bending both ends by a predetermined length, and is fixedly coupled to the inner wall of the inner tank through the bent surfaces.

17. The liquefied hydrogen fuel tank for ships according to claim 16, wherein the bent surfaces are cut at least once and divided into a plurality of parts.

18. The liquefied hydrogen fuel tank for ships according to claim 16, wherein the first panel comprises a reinforcing portion formed by bending at least one of an upper end or a lower end by a predetermined length,
wherein the reinforcing portion is formed by being bent in a direction opposite to the bent surfaces with respect to the longitudinal direction of the inner tank.

19. The liquefied hydrogen fuel tank for ships according to claim 1, comprising a baffle provided inside the liquefied hydrogen fuel tank, wherein the baffle comprises a panel arranged in the height direction of the inner tank, both ends of which are fixedly coupled to the inner wall of the inner tank,
wherein the panel is formed such that its upper and lower ends are spaced apart by a predetermined distance from the inner wall of the inner tank.

20. The liquefied hydrogen fuel tank for ships according to claim 19, wherein the panel comprises at least one hole having a predetermined height and extending in the width direction of the inner tank,
wherein the at least one hole is formed such that both ends thereof are positioned within a predetermined distance from both side edges of the panel.

21. The liquefied hydrogen fuel tank for ships according to claim 1, comprising a baffle provided inside the inner tank, wherein the baffle comprises a plurality of panels arranged in the height direction of the inner tank, each having both ends fixedly coupled to the inner wall of the inner tank,
wherein at least one of the plurality of panels is formed such that its upper and lower ends are spaced apart by a predetermined distance from an adjacent panel or the inner wall of the inner tank.
